# EUROPEAN PATENT SPECIFICATION

(11) **EP 3 169 164 B1**
(45) Date of publication and mention of the grant of the patent: **30.01.2019**
(21) Application number: 15751138.7
(22) Date of filing: 17.07.2015
(51) Int. Cl.: A23G 3/28, B05C 5/02, A23P 20/00, A23P 20/15, A23P 20/25, A23G 3/34

(54) **DEVICE AND METHOD FOR APPLYING A FLUID OR SUSPENSION TO A SUBSTRATE**
VORRICHTUNG UND VERFAHREN ZUM AUFBRINGEN EINER FLÜSSIGKEIT ODER SUSPENSION AUF EIN SUBSTRAT
DISPOSITIF ET PROCÉDÉ DESTINÉS À APPLIQUER UN FLUIDE OU UNE SUSPENSION SUR UN SUBSTRAT

(30) Priority: 17.07.2014 NL 2013209
(43) Date of publication of application: 24.05.2017
(73) Proprietor: FoodJet B.V., 6541 DA Nijmegen (NL)
(72) Inventor: DE GROOD, Pascal Johannes, 6603 CX Alvema (NL)
(74) Representative: Patentwerk B.V.
(86) International application number: PCT/NL2015/050527
(87) International publication number: WO 2016/010435

(56) References cited:
- EP-A1- 1 221 409
- EP-A1- 2 662 137
- EP-A2- 1 958 517
- US-A- 4 030 640
- US-A1- 2012 067 920

## Description

The present invention relates to a device and method for applying a fluid or suspension to a substrate, more in particular a device and method for supplying a food fluid or suspension to a substrate formed by a food too.

Devices and methods for applying a fluid on a substrate are known in the art. One example are so-called nozzle-jets, that make individual droplets from a fluid, which droplets are then applied to the substrate. The droplets are made and applied by a nozzle-jet. A nozzle is an orifice through which a small amount of liquid can be shot at a high velocity. When the nozzle-opening is closed by the closing a membrane and the space around the nozzle is filled with fluid under a certain pressure, then the gap can be opened during a few milliseconds to allow a small amount to escape.

When the pressure in an air chamber is at a higher pressure than the liquid in a container, the liquid can be recirculated through the printing head, back to the return piping without depositing.

When during a very short time the pressure in the chamber air pressure drops to zero, the mass pressure lifts the membrane from the spray nozzle.

When the pressure comes back to the air chamber, the membrane is pushed back onto the nozzle. This occurs with a considerable speed which helps a droplet to break away from the surface tension.

By using a plurality of abovementioned nozzlejets in combination with a moving target, matrix-like patterns can be deposited. In addition, by using an array of nozzle-jets in an oblique angle with a time lag compensation, the resolution of the pattern can be higher than the array line pitch. An example of the thus described state of the art is described in the European Patent EP1958517 from the same applicant.

However, the device was never developed for pureed vegetables and meats. If these substances are used as a liquid, nozzles may tend to block or give distorted droplet jets, since small fibrous coagulates will get stuck at the nozzle orifices. This may for instance be a result from a separation effect between the liquid part and the solid part of the to be printed suspension, which can be a puree or the like. The effect may in particular be present with materials that had been frozen first.

It is therefore a goal of the present invention to take away the disadvantages of the prior art and to provide a solution for printing fluids or suspensions with a higher viscosity.

The invention thereto proposes a device for applying a fluid or suspension, in particular a food fluid or suspension onto a substrate, comprising a reservoir for the fluid or suspension, means for bringing the fluid or suspension under pressure above atmosphere pressure, a plurality of outlet channels, extending from the reservoir to a delivery-position for the fluid above the substrate, a plurality of controllable valves, each incorporated in one of the outlet channels and a controller for controlling the valves, wherein the valves are pinch valves and the controller is configured for controlling the valves individually.

The so-called "pinch-valve" has appeared to be a very successful principle for shutting off liquids with a high degree of solid particles is, whereas a part of the transport channel is made out of a flexible material. When this flexible part of the channel is pressurized from the outside, it will collapse and stop the internal flow of material.

The apparatus according to the invention may for instance be used for applying unsieved tomato sauce, unsieved potato mash, viscous aerated cream - sugar mixture, marinade (fat pepper salt) and/or chocolate compounds with high milk powder content.

Preferably, the pinch valves each comprise an elastic hollow throughput channel, surrounded by a pressure chamber for a medium, wherein the channel can be opened and closed by increasing respectively decreasing the medium pressure.

The valves may be used in various industrial areas, from to pharmacy (because of hygienical sealing) to heavy construction (pumping of pebble-filled liquid concrete). In a miniaturised shape, the principle may be used in a so called FoodJet printhead according to the state of the art.

The elastic hollow throughput channel may comprise a cylindrical body, optionally stretching between two annular flanges. In another embodiment o-shaped rings may be used. The elastic hollow throughput channel may be manufactured with the aid of silicone injection moulds.

Materials that have proved to be suitable for the elastic hollow throughput channel are silicone rubber or EPDM, while the inner diameter lies between 1 and 10 millimeter and the outer diameter lies between 1 and 10 millimeter. The length of the channel between the flanges is typically 3 to 5 times the diameter, and a threshold pressure for an (empty) elastic hollow throughput channel to close or open may lie between 0,2 and 6 bar.

In a practical embodiment, the outlet channels are formed by bores in an essentially massive block. Such block may be formed by at least two parts, wherein the elastic hollow throughput channels are arranged in recesses at the plane of intersection of the two parts. This construction has appeared to be very robust and is relatively easy to manufacture.

The massive block comprises channels for the medium, that extend from an actuator for delivering medium under pressure, to the medium chamber, surrounding the elastic hollow throughput channel.

A higher flexibility and an increased number of possibilities can be obtained when the device according to the invention is suspended movable, in particular translatable and/or rotatable with respect to the substrate.

The controller may be configured for controlling the volume or the launching speed of droplet of the fluid.

In an alternative embodiment, the reservoir for the fluid or suspension and the elastic hollow throughput channels, are comprised by a separate, exchangeable part, thus forming a cartridge. In that case, the device comprises a receiving compartment for the exchangeable part, and the means for bringing the fluid or suspension under pressure above atmosphere pressure are arranged to put the reservoir of the exchangeable part under pressure; and the plurality of outlet channels, are arranged to receive the elastic throughput channels.

In a practical embodiment, the outlet channels are formed by bores in an essentially massive block. Such block may be formed by at least two parts, wherein the elastic hollow throughput channels are arranged in recesses at the plane of intersection of the two parts. This construction has appeared to be very robust and is relatively easy to manufacture.

The massive block comprises channels for the medium, that extend from an actuator for delivering medium under pressure, to the medium chamber, surrounding the elastic hollow throughput channel.

The invention further relates to a cartridge for use in the above device, comprising a reservoir for the fluid or suspension; and elastic hollow throughput channels, and in particular such cartridge, comprising a fluid or suspension. In another embodiment thereof, an assembly of elastic hollow throughput channels may be formed as an integral part, together with the cartridge with the fluid or suspension.

The invention will now be elucidated into more detail with reference to the following figures. Herein:
- Figure 1 shows a perspective sectional view of a pinch valve;
- Figure 2 shows an elastic hollow throughput channel and a perspective sectional view thereof;
- Figure 3A shows an exploded view of a device according to the present invention;
- Figure 3B shows a perspective sectional view of a device according to the present invention;
- Figure 4 shows a perspective view of a device according to the present invention; and
- Figure 5 shows a perspective view of an alternative embodiment of a device according to the present invention.
- Figure 6 shows a cartridge for use in a device according to an alternative embodiment of the present invention;
- Figure 7 shows a detail of the device according to the present invention, configured for cooperation with the cartridge from figure 6.
- Figure 8 shows an embodiment, wherein, an assembly of elastic hollow throughput channels is formed as an integral part, together with the cartridge with the fluid or suspension.

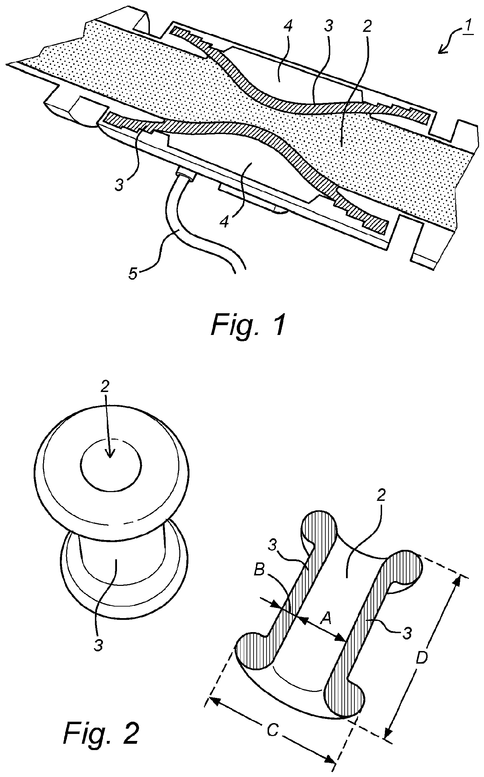

Figure 1 shows a perspective sectional view of a pinch valve 1 in general. The pinch valve 1 comprises an elastic hollow throughput channel 2, 3, surrounded by a pressure chamber 4 for a medium, wherein the channel can be opened and closed by increasing respectively decreasing the medium pressure via a medium channel 5.

Figure 2 shows an elastic hollow throughput channel 2, 3 in a perspective and sectional view thereof. The elastic hollow throughput channel has a wall with an inner diameter A between 3 and 5 mm, an outer diameter B between 4 and 7 millimeter, a Flange diameter C between 12 and 16 millimeter and a channel length D between 10 and 20 millimeter.

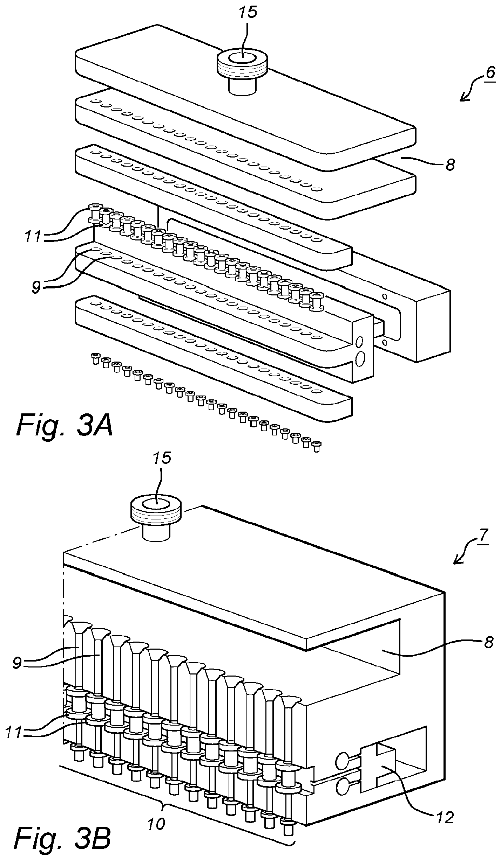

Figure 3A shows an exploded view 6 of a device according to the present invention, and figure 3B a perspective sectional view 7 of the same. The device comprises a reservoir 8 for the fluid or suspension, (non depicted) means for bringing the fluid or suspension under pressure above atmosphere pressure, and a plurality of outlet channels 9, extending from the reservoir 8 to a delivery-position 10 for the fluid above the (non-depicted) substrate, a plurality of controllable valves 11, each incorporated in one of the outlet channels 9, a controller 12 for controlling the valves 11, wherein the valves are pinch valves and the controller 12 is configured for controlling the valves 11 individually.

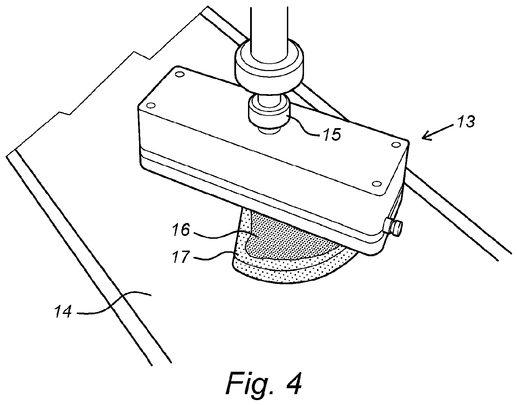

Figure 4 shows a perspective view of a device 13 according to the present invention, for applying a fluid or suspension 16, in particular a food fluid or suspension onto a substrate 17, suspended 15 movable, in particular translatable and/or rotatable with respect to the substrate 15, which is transported on a transport belt 14.

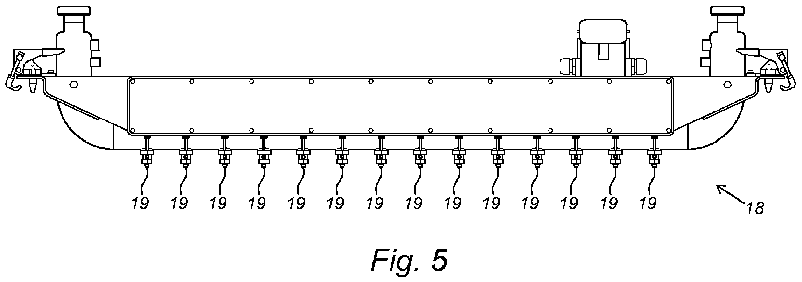

Figure 5 shows an alternative embodiment 18 of the present invention. Instead of a configuration wherein the nozzles 19 have a fixed mutual distance, the distance of the nozzles 19 can be changed, by removing them from a central tube and replacing them at a desired distance. This way, there is no need to place the head diagonally oriented above a transport belt for a substrate, but a rectangular orientation can be used at all time.

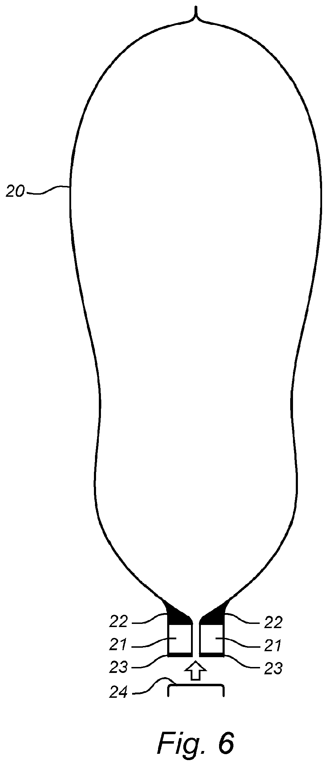

Figure 6 shows a cartridge for use in an embodiment of the device according to the present invention, which embodiment comprises a receiving compartment for the exchangeable part, and wherein the means for bringing the fluid or suspension under pressure above atmosphere pressure are arranged to put the reservoir of the exchangeable part under pressure; and the plurality of outlet channels, are arranged to receive the elastic throughput channels.

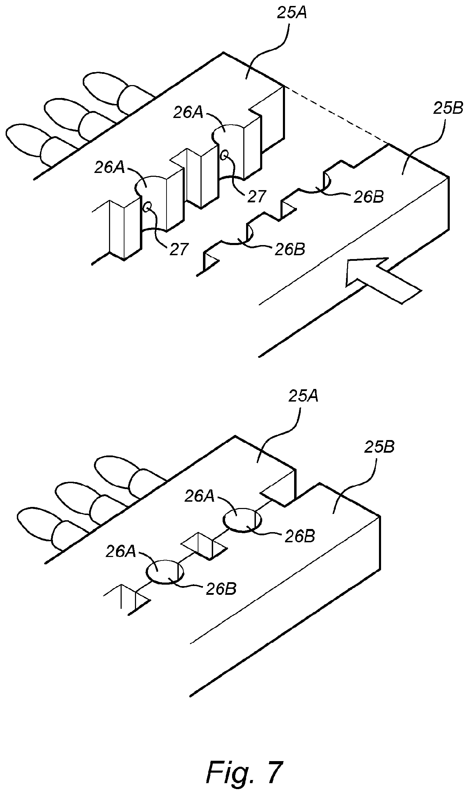

The cartridge comprises a reservoir 20 for the fluid or suspension; and at least one elastic hollow throughput channel 21. The hollow throughput channel is in the embodiment shown, provided with a first reinforced collar 22, essentially at the junction with the reservoir, and a second reinforced collar 23 at its distal end from the reservoir. The collars 22, 23 serve to enable to clamp the channel in the device as will be shown in figure 7, and to prevent a medium the pinch valves are operated with introduced via opening 27 (see figure 7) to leak away between the outlet channel and the hollow throughput channel.

Figure 7 shows a detail of an embodiment according to the present invention, wherein the plurality of outlet channels 26A, B are formed in between two mutually movable parts 25A, B of the device, having a first mutual position (shown) wherein the channels 26A, B are separated for receiving the elastic hollow throughput channels, and a second mutual position, wherein the channels 26A, B are closed for holding the elastic hollow throughput channels.

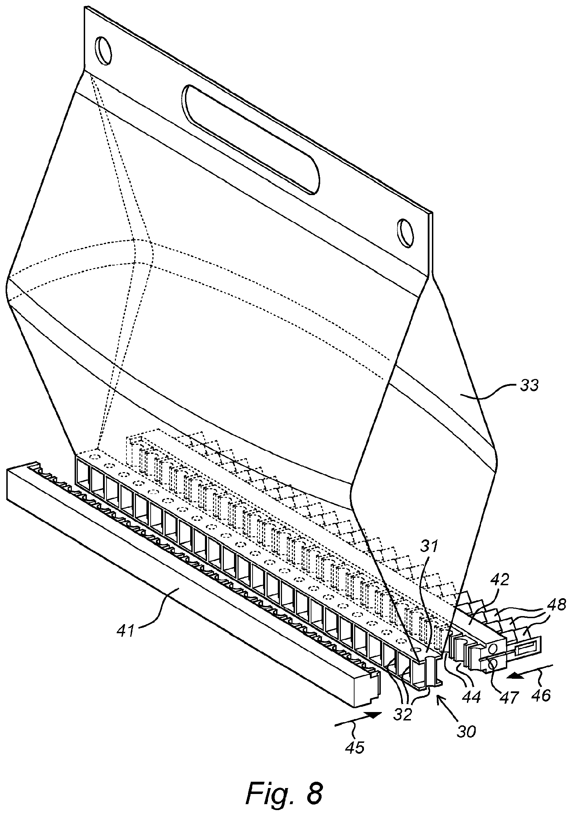

Figure 8 shows an partly exploded view of an embodiment 30, wherein an assembly of elastic hollow throughput channels 32 are formed as an integral part 31, together with the cartridge 33 with the fluid or suspension. The device according to this embodiment of the invention comprises two parts 41, 42 for forming pressure chambers 44 for a medium. After inserting the assembly of throughput channels 32 and the cartridge 33, parts 41 and 42 are moved against each other, in the directions of arrows 45, 46, enclosing the assembly 32. The assembly 32 and the parts 41 and 42 are dimensioned such that pressure chambers 44 are formed around the throughput channels 32 when the parts 41 and 42 are closed. The pressure chambers 44 are coupled with valves 48 via pressure channels 47.

## Claims

1. Device for applying a fluid or suspension, in particular a food fluid or suspension onto a substrate, comprising:
- A reservoir for the fluid or suspension;
- Means for bringing the fluid or suspension under pressure above atmosphere pressure;
- A plurality of outlet channels, extending from the reservoir to a delivery-position for the fluid above the substrate;
- A plurality of controllable valves, each incorporated in one of the outlet channels;
- A controller for controlling the valves;
wherein:
- The valves are pinch valves; and
- The controller is configured for controlling the valves individually; and
- the pinch valves each comprise an elastic hollow throughput channel, surrounded by a pressure chamber for a medium, wherein the channel can be opened and closed by increasing respectively decreasing the medium pressure.
and wherein
- The reservoir for the fluid or suspension; and
- the elastic hollow throughput channels, are comprised by a separate, exchangeable part, thus forming a cartridge.

2. Device according to claim 1, comprising:
- a receiving compartment for the exchangeable part, wherein
- the means for bringing the fluid or suspension under pressure above atmosphere pressure are arranged to put the reservoir of the exchangeable part under pressure; and
- the plurality of outlet channels, are arranged to receive the elastic throughput channels.

3. Device according to claim 1 or 2, wherein the plurality of outlet channels are formed in between two mutually movable parts of the device, having a first mutual position wherein the channels are separated for receiving the elastic hollow throughput channels, and a second mutual position, wherein the channels are closed for holding the elastic hollow throughput channels.

4. Device according to any of the preceding claims, wherein the elastic hollow throughput channel comprises a cylindrical body, stretching between two annular flanges.

5. Device according to any of the preceding claims, wherein the outlet channels are formed by bores in an essentially massive block.

6. Device according to claim 5, wherein the massive block is formed by at least two parts, wherein the elastic hollow throughput channels are arranged in recesses at the plane of intersection of the two parts.

7. Device according to claim 6, wherein the massive block comprises channels for the medium, that extend from an actuator for delivering medium under pressure, to the medium chamber, surrounding the elastic hollow throughput channel.

8. Device according to any of the preceding claims, suspended movable, in particular translatable and/or rotatable with respect to the substrate.

9. Device according to any of the preceding claims, wherein the controller is configured for controlling the volume or the launching speed of a droplet of the fluid.

10. Cartridge for use in a device according to any of the preceding claims, comprising:
- a reservoir for the fluid or suspension; coupled with a plurality elastic hollow throughput channels.

11. Cartridge according to claim 10, comprising a fluid or suspension.

## Patentansprüche

1. Vorrichtung zum Aufbringen eines Fluids oder einer Suspension, insbesondere eines Nahrungsmittelfluids oder einer Nahrungsmittelsuspension, auf ein Substrat, umfassend:
- ein Reservoir für das Fluid oder die Suspension;
- Mittel, um das Fluid oder die Suspension auf Druck oberhalb von atmosphärischem Druck zu bringen;
- eine Vielzahl von Auslasskanälen, die sich von dem Reservoir zu einer Abgabeposition für das Fluid über dem Substrat erstrecken;
- eine Vielzahl von steuerbaren Ventilen, die jeweils in einen der Auslasskanäle eingebaut sind;
- eine Steuerung zum Steuern der Ventile;
- wobei:
- die Ventile Quetschventile sind; und
- die Steuerung konfiguriert ist, um die Ventile einzeln zu steuern; und
- die Quetschventile jeweils einen elastischen hohlen Durchsatzkanal umfassen, der von einer Druckkammer für ein Medium umgeben ist, wobei der Kanal durch Erhöhen beziehungsweise Absenken des Drucks des Mediums geöffnet beziehungsweise geschlossen werden kann,
- und wobei
- das Reservoir für das Fluid oder die Suspension; und
- die elastischen hohlen Durchsatzkanäle durch ein separates auswechselbares Teil gestellt werden, wodurch eine Kartusche gebildet wird.

2. Vorrichtung nach Anspruch 1, umfassend:
- ein Aufnahmefach für das auswechselbare Teil, wobei
- die Mittel, um das Fluid oder die Suspension auf Druck oberhalb von atmosphärischem Druck zu bringen, angeordnet sind, um das Reservoir des auswechselbaren Teils unter Druck zu setzen; und
- die Vielzahl von Auslasskanälen angeordnet ist, um die elastischen Durchsatzkanäle aufzunehmen.

3. Vorrichtung nach Anspruch 1 oder 2, wobei die Vielzahl der Auslasskanäle zwischen zwei wechselseitig beweglichen Teilen der Vorrichtung gebildet sind, die eine erste wechselseitige Position, in der die Kanäle zur Aufnahme der elastischen hohlen Durchsatzkanäle getrennt sind, und eine zweite wechselseitige Position aufweisen, in der die Kanäle geschlossen sind, um die elastischen hohlen Durchsatzkanäle zu halten.

4. Vorrichtung nach einem der vorhergehenden Ansprüche, wobei der elastische hohle Durchsatzkanal einen zylindrischen Körper umfasst, der sich zwischen zwei ringförmigen Flanschen erstreckt.

5. Vorrichtung nach einem der vorhergehenden Ansprüche, wobei die Auslasskanäle durch Bohrungen in einem im Wesentlichen massiven Block gebildet werden.

6. Vorrichtung nach Anspruch 5, wobei der massive Block durch mindestens zwei Teile gebildet wird, wobei die elastischen hohlen Durchsatzkanäle in Aussparungen an der Schnittebene der beiden Teile angeordnet sind.

7. Vorrichtung nach Anspruch 6, wobei der massive Block Kanäle für das Medium umfasst, die sich von einem Aktor zur Abgabe von Medium unter Druck zu der Mediumkammer erstrecken, welche den elastischen hohlen Durchsatzkanal umgibt.

8. Vorrichtung nach einem der vorhergehenden Ansprüche, die beweglich, insbesondere translatierbar und/oder rotierbar, in Bezug auf das Substrat aufgehängt ist.

9. Vorrichtung nach einem der vorhergehenden Ansprüche, wobei die Steuerung konfiguriert ist, um das Volumen oder die Startgeschwindigkeit eines Tröpfchens des Fluids zu steuern.

10. Kartusche zur Verwendung in einer Vorrichtung nach einem der vorhergehenden Ansprüche, umfassend:
- ein Reservoir für das Fluid oder die Suspension, gekoppelt mit einer Vielzahl von elastischen hohlen Durchsatzkanälen.

11. Kartusche nach Anspruch 10, umfassend ein Fluid oder eine Suspension.

## Revendications

1. Dispositif pour appliquer un fluide ou une suspension, en particulier un fluide ou une suspension alimentaire sur un substrat, comprenant:
un réservoir pour le fluide ou la suspension;
des moyens pour amener le fluide ou la suspension sous pression au-dessus de la pression atmosphérique;
une pluralité de canaux de sortie, qui s'étendent à partir du réservoir jusqu'à une position de distribution pour le fluide au-dessus du substrat;
une pluralité de vannes commandables, dont chacune est incorporée dans l'un des canaux de sortie;
un dispositif de commande pour commander les vannes;
dans lequel:
les vannes sont des clapets à pincement; et
le dispositif de commande est configuré de manière à commander les vannes individuellement; et
les clapets à pincement comprennent chacun un canal traversant creux élastique, entouré par une chambre de pression pour un milieu, dans lequel le canal peut être ouvert et fermé en augmentant respectivement en diminuant la pression du milieu,
et dans lequel
le réservoir pour le fluide ou la suspension; et
les canaux traversants creux élastiques sont constitués par une partie échangeable séparée, formant de ce fait une cartouche.

2. Dispositif selon la revendication 1, comprenant:
un compartiment de réception pour la partie échangeable, dans lequel
les moyens pour amener le fluide ou la suspension sous pression au-dessus de la pression atmosphérique sont agencés de manière à mettre sous pression le réservoir de la partie échangeable; et
la pluralité de canaux de sortie, sont agencés de manière à recevoir les canaux traversants élastiques.

3. Dispositif selon la revendication 1 ou 2, dans lequel la pluralité de canaux de sortie sont formés entre deux parties mutuellement mobiles du dispositif, qui présentent une première position mutuelle dans laquelle les canaux sont séparés pour recevoir les canaux traversants creux élastiques, et une seconde position mutuelle dans laquelle les canaux sont fermés pour maintenir les canaux traversants creux élastiques.

4. Dispositif selon l'une quelconque des revendications précédentes, dans lequel le canal traversant creux élastique comprend un corps cylindrique, qui s'étire entre deux brides annulaires.

5. Dispositif selon l'une quelconque des revendications précédentes, dans lequel les canaux de sortie sont formés par des alésages dans un bloc essentiellement massif.

6. Dispositif selon la revendication 5, dans lequel le bloc massif est formé par au moins deux parties, dans lequel les canaux traversant creux élastiques sont agencés dans des évidements au niveau du plan d'intersection des deux parties.

7. Dispositif selon la revendication 6, dans lequel le bloc massif comprend des canaux pour le milieu, qui s'étendent à partir d'un actionneur pour distribuer le milieu sous pression, jusqu'à la chambre de milieu, qui entoure le canal traversant creux élastique.

8. Dispositif selon l'une quelconque des revendications précédentes, suspendu et mobile, en particulier déplaçable et/ou rotatif par rapport au substrat.

9. Dispositif selon l'une quelconque des revendications précédentes, dans lequel le dispositif de commande est configuré de manière à commander le volume ou la vitesse de projection d'une gouttelette du fluide.

10. Cartouche à utiliser dans un dispositif selon l'une quelconque des revendications précédentes, comprenant un réservoir pour le fluide ou la suspension, couplé à une pluralité de canaux traversants creux élastiques.

11. Cartouche selon la revendication 10, contenant un fluide ou une suspension.
